# EUROPEAN PATENT APPLICATION

(11) **EP 4 647 970 A1**
(43) Date of publication of application: **12.11.2025**
(21) Application number: 25175191.3
(22) Date of filing: 08.05.2025
(51) Int. Cl.: G06N 3/065, G06N 3/045

(54) **ANALOG-DIGITAL HYBRID DEEP NEURAL NETWORK COMPUTING DEVICE AND COMPUTING METHOD**

(30) Priority: 10.05.2024 KR 20240062149; 03.04.2025 KR 20250043317
(71) Applicant: Intelligent HW, Inc., Lewes, DE 19958 (US)
(72) Inventor: HONG, Seok Man, 06537 Seoul (KR); ZANG, Hwan Jun, 13531 Seongnam-si, Gyeonggi-do (KR)
(74) Representative: Beck & Rössig European Patent Attorneys

(57) **Abstract**

An analog-digital hybrid deep neural network computing device according to the invention includes a control unit (4000), an analog processing unit (1000), a digital processing unit (2000), and a multi-channel bus (3000), and in which the algorithm includes a plurality of layers for computation, and an analog MAC computation in an analog computing manner is performed for a first group of layers including one or more layers among the plurality of layers in the analog processing unit and a digital MAC computation in a digital computing manner is performed for a second group of layers, which is the remaining layers except for the first group of layers, in the digital processing unit.

## Description

### BACKGROUND OF THE INVENTION

### 1. Field of the Invention

The present invention relates to a computing accelerator that implements an artificial neural network, and more particularly, to an analog-digital hybrid computing device and computing method in which analog and digital methods are used in a mixed manner.

### 2. Description of the Related Art

The human brain is composed of numerous nerve cells called neurons. Each neuron is connected to hundreds to thousands of other neurons through connecting parts called synapses. In order to imitate human intelligence, a model obtained by modeling the operating principles of biological neurons and the connection between the neurons is called an artificial neural network (ANN) model.

A seep neural network (DNN) is a type of artificial neural networks that show excellent performance in various fields such as image recognition, voice recognition, natural language processing, and recommendation systems. In particular, the performance of the deep neural network is continuously improving based on large amounts of data and high computing power, and has become a core technology in the field of artificial intelligence.

This deep neural network is a neural network that has several hidden layers between an input layer and an output layer. The deep neural network is composed of an input layer, several hidden layers, and an output layer. Each layer is composed of multiple neurons (nodes), and neurons in adjacent layers are connected to each other. In this deep neural network, input data is sequentially propagated from the input layer to the output layer. Each neuron receives inputs from neurons in the previous layer, calculates a weighted sum, and transmits an output value to the next layer through an activation function.

In order to implement this deep neural network, digital computing units using digital computing have been developed in the past. However, digital computing units boast high accuracy, but they inevitably consume a large amount of energy due to problems such as limitations in parallel processing and memory barriers for loading information from an external memory, and are problematic for application in various fields due to problems such as their large size and resulting high price.

In order to overcome these problems, analog computing is capable of large-scale parallel processing and can be manufactured at low cost while greatly reducing energy usage due to its absence of memory barriers, and thus much research and development has been conducted recently thereon. However, limitations in terms of precision and reproducibility, and difficulties in analog circuit design and programming are still problems that need to be solved.

### SUMMARY OF THE INVENTION

The invention is intended to provide an energy-efficient and low-cost deep neural network computing device.

In addition, the invention is intended to provide an operating method for the energy-efficient and low-cost deep neural network computing device.

According to an embodiment of the invention, there is provided an analog-digital hybrid deep neural network computing device which is an artificial intelligence accelerator for algorithmic computation according to a deep neural network (DNN) in accordance with the invention and includes a control unit, an analog processing unit, a digital processing unit, and a multi-channel bus, and in which the algorithm includes a plurality of layers for computation, an analog MAC computation in an analog computing manner is performed for a first group of layers including one or more layers among the plurality of layers in the analog processing unit, and a digital MAC computation in a digital computing manner is performed for a second group of layers, which is the remaining layers except for the first group of layers, in the digital processing unit.

**In** addition, in an embodiment of the analog-digital hybrid deep neural network computing device according to the invention, said analog processing unit may include a memory array including a plurality of non-volatile memories, an input unit, and an output unit, some regions in said memory array are set as a first region, and first information including a synaptic weight for said analog MAC computation in said analog processing unit may be stored therein, and at least some regions in the remaining regions excluding said first region are set as a second region, and second information including information for said digital MAC computation in said digital processing unit may be stored therein.

In addition, in an embodiment of the analog-digital hybrid deep neural network computing device according to the invention, said input unit may include a digital-to-analog converter (DAC) that converts a digital signal into an analog signal and said output unit may include an analog-to-digital converter (ADC) and a sense amplifier (SA).

In addition, in an embodiment of the analog-digital hybrid deep neural network computing device according to the invention, said output unit may further include a branch circuit, and the branch circuit may transmit an output signal output from said memory array to said analog-to-digital converter when said output signal is a result of said analog MAC computation and transmit the output signal to the sense amplifier when said output signal is the second information.

**In** addition, in an embodiment of the analog-digital hybrid deep neural network computing device according to the invention, said memory array in said analog processing unit may be an array of flash memories.

**In** addition, in an embodiment of the analog-digital hybrid deep neural network computing device according to the invention, said flash memory may be a memory capable of storing 2 or more bits of information per memory cell.

**In** addition, in an embodiment of the analog-digital hybrid deep neural network computing device according to the invention, said digital processing unit may include a logic operation unit and an SRAM, and may not include a DRAM.

**In** addition, in an embodiment of the analog-digital hybrid deep neural network computing device according to the invention, said first group of layers may include a fully connected layer.

According to an embodiment of the invention, there is provided a method for an algorithmic computation according to a deep neural network (DNN) through an analog-digital hybrid deep neural network computing device including an analog processing unit for analog computation, a digital processing unit for digital computation, a multi-channel bus, and a control unit, in which the algorithm includes a plurality of neural network layers for computation, an analog multiplication and accumulation (MAC) computation is performed in an analog computing manner for a first group of layers including one or more layers among the plurality of layers and MAC computation is performed in a digital computing manner for a second group of layers, which is the remaining layers except the first group of layers.

In an embodiment of the method for the algorithmic computation according to the deep neural network, said analog processing unit may include a memory array including a plurality of non-volatile memories, an input unit, and an output unit, and the method may include (a) setting some regions in said memory array as a first region and setting at least some regions in the remaining regions excluding the first region as a second region, (b) storing first information including a synaptic weight for said analog MAC computation in the first region, and storing second information including information for said digital MAC computation in the second region, (c) performing the analog MAC computation through the first information stored in the first region when layers for computation among said neural network layers are said first group of layers, and (d) performing said digital MAC computation in said digital processing unit by extracting the second information from the second region when the layers for the computation among said neural network layers are said second group of layers.

In an embodiment of the method for algorithmic computation according to the deep neural network, said digital processing unit may include a controller, a logic operation unit, and an SRAM, and may not include a DRAM, and said digital MAC computation may include loading the extracted second information into the SRAM of said digital processing unit and performing the digital MAC computation in said logic operation unit using the loaded second information.

In an embodiment of the method for algorithmic computation according to the deep neural network, in said analog processing unit, said input unit may include a digital-to-analog converter (DAC) that converts a digital signal into an analog signal and said output unit may include a branch circuit, an analog-to-digital converter (ADC), and a sense amplifier (SA), and said (c) includes converting a digital input signal into an analog input signal through the digital-to-analog converter and inputted to the memory array, performing the analog MAC computation by the analog input signal inputted to the memory array, and transmitting the result of the analog MAC computation to the analog-to-digital conversion unit through the branch circuit and converting a result of the analog MAC computation into a digital output signal, and in said (d), the extraction of the second information may be accomplished by applying a signal to said second region from said digital-to-analog converter and transmitting an output signal from said second region to the sense amplifier through the branch circuit.

In an embodiment of the method for algorithmic computation according to the deep neural network, said first group of layers may include a fully connected layer.

In an embodiment of the method for algorithmic computation according to the deep neural network, the computation of said first group of layers and the computation of said second group of layers may be performed at non-overlapping times.

According to the invention, an energy-efficient deep neural network computing device and computing method can be provided, so that power consumption can be significantly reduced in the field of artificial intelligence application, and the industrial field to which artificial intelligence can be applied through a low-cost deep neural network computing device can be expanded.

### BRIEF DESCRIPTION OF THE DRAWINGS

Fig. 1 illustrates a block diagram of an analog-digital hybrid deep neural network computing device according to an embodiment of the invention;
Fig. 2 illustrates a schematic diagram of an analog processing unit of an analog-digital hybrid deep neural network computing device according to an embodiment of the invention;
Fig. 3 is a schematic diagram describing an analog MAC computation process in an embodiment of the invention;
Fig. 4 illustrates a schematic diagram of an analog processing unit of an analog-digital hybrid deep neural network computing device according to an embodiment of the invention;
Fig. 5 illustrates a schematic diagram of an analog processing unit of an analog-digital hybrid deep neural network computing device according to an embodiment of the invention;
Fig. 6 illustrates a schematic diagram of an analog processing unit of an analog-digital hybrid deep neural network computing device according to an embodiment of the invention;
Fig. 7 illustrates a schematic diagram of an analog processing unit of an analog-digital hybrid deep neural network computing device according to an embodiment of the invention; and
Fig. 8 illustrates a schematic diagram of an analog-digital hybrid deep neural network computing device according to an embodiment of the invention.

### DETAILED DESCRIPTION OF THE EXEMPLARY EMBODIMENTS

Hereinafter, embodiments of the invention will be described in detail with reference to the accompanying drawings so that those skilled in the art can easily implement the invention. However, the present application may be implemented in various different forms and is not limited to the embodiments described herein.

Throughout the specification of the present application, when a part is said to "include" a certain component, this means that it may further include other components rather than excluding other components unless specifically stated to the contrary.

The terms "about", "substantially", etc., as used in this specification, are used in the sense that the terms are at or near numerical values thereof when manufacturing and material tolerances inherent in the meanings stated are given, and are used to prevent unscrupulous infringers from unfairly using the disclosure contents in which precise or absolute figures are mentioned to help understanding the present application. In addition, throughout the specification of the present application, "step in which ~" or "step of ~" do not mean "step for ~."

Throughout the specification of this application, the term "combination of these" included in the expressions in the Makushi format means a mixture or combination of one or more selected from a group consisting of the components described in the Makushi format, and means including one or more selected from the group consisting of said components.

Throughout this specification, the description of "A and/or B" means "A or B," or, "A and B."

As described above, most of the artificial intelligence accelerators for deep neural network computations currently being commercialized employ a digital artificial intelligence computing machine that performs multiplication and accumulation (MAC) computations using a logic operation unit such as RISC-V. This digital artificial intelligence computing machine is fast and accurate, but it needs to solve the problem of excessive energy consumption due to memory barriers and expensive devices.

An analog in-memory computing method is a method for storing weights in a non-volatile memory and performing MAC computations using them. Such analog in-memory computing is capable of large-scale parallel processing, solves the memory barrier problem by not having external memory, can significantly reduce energy usage, and can be manufactured at a low price, and accordingly, much research and development is being conducted thereon. Meanwhile, analog computing refers to analog in-memory computing in this application.

Deep neural networks require algorithmic computations performed using several layers, and for each of these layers, there is a case where MAC computation in a digital computing manner using logic operation units is advantageous and a case where MAC computation in an analog computing manner is advantageous. Therefore, the artificial intelligence accelerator for deep neural network algorithmic computation and its operating method according to the invention are characterized in that some of several layers for deep neural network computation perform MAC computations in a digital computing manner, while other perform MAC computations in an analog computing manner.

More specifically, an artificial intelligence accelerator for a deep neural network (DNN) algorithmic computation according to an embodiment of the invention may be an analog-digital hybrid deep neural network computing device which includes an analog processing unit, a digital processing unit, a multi-channel bus, and a control unit and in which the algorithm includes a plurality of layers for computation, and an analog MAC computation in an analog computing manner is performed for a first group of layers including one or more layers among the plurality of layers in the analog processing unit and a digital MAC computation in a digital computing manner is performed for a second group of layers, which is the remaining layers except for the first group of layers, in the digital processing unit.

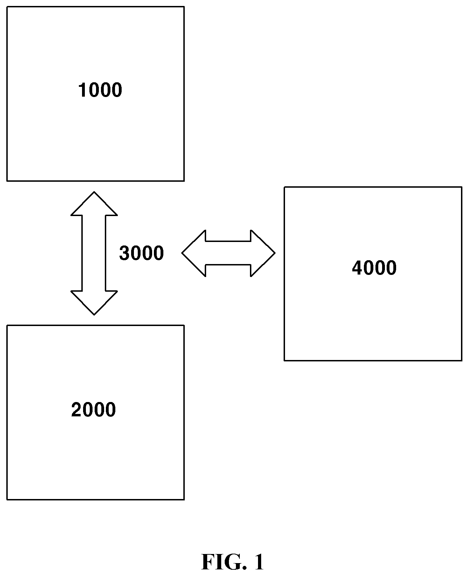

Fig. 1 illustrates a block diagram of an analog-digital hybrid deep neural network computing device according to an embodiment of the invention. The analog-digital hybrid deep neural network computing device includes an analog processing unit 1000 for analog MAC computation, a digital processing unit 2000 for digital MAC computation, a multi-channel bus 3000, and a control unit 4000 for controlling the entire system. For deep neural network algorithm computation, since computations are performed continuously for a plurality of layers, the multi-channel bus 3000 is required for information communication between the analog processing unit 1000 for computation of a first group of layers, the digital processing unit 2000 for computation of a second group of layers, and the control unit 4000.

In particular, the analog processing unit for analog computation includes a memory array including a plurality of non-volatile memories, an input unit, and an output unit.

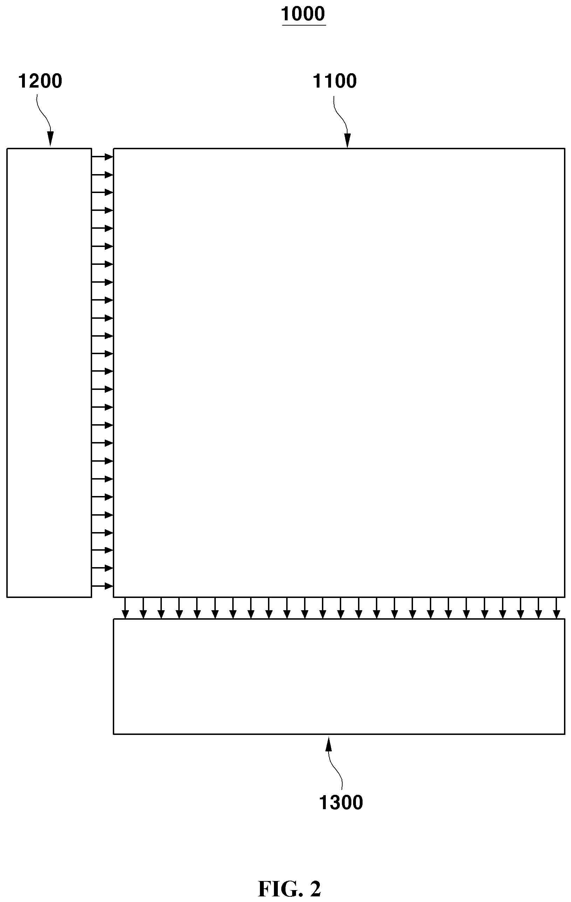

Fig. 2 describes an example of such an analog processing unit. The analog processing unit 1000 includes a memory array 1100, an input unit 1200 for inputting a signal to the memory array 1100, and an output unit 1300 for outputting a result from the memory array 1100.

In the analog MAC computation, as described above, weight information is stored in a non-volatile memory of the memory array 1100, an input signal is input to the non-volatile memory from the input unit 1200 to perform the MAC computation at once, and an MAC computation result is output through the output unit 1300.

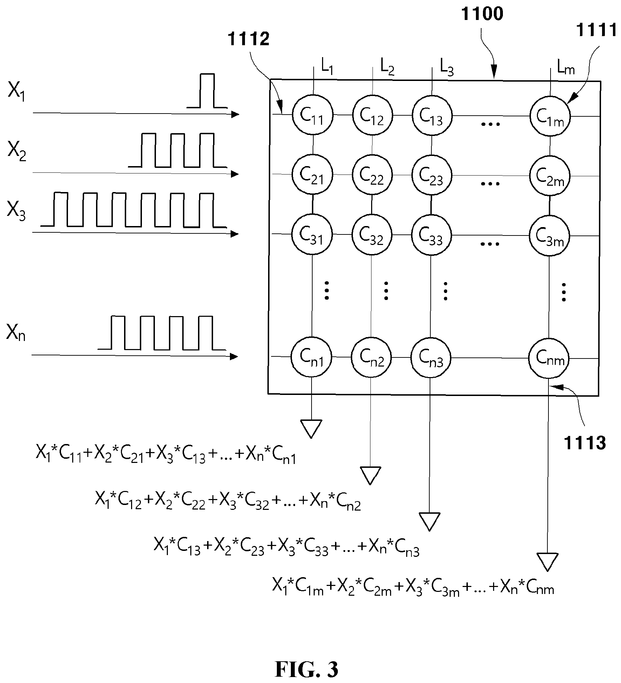

Fig. 3 illustrates an example of such an analog MAC computation. Input signals X₁, X₂, X₃,...,Xₙ are input from the input unit 1200 through an input line 1112 of the memory array 1110. Here, the input signal may be expressed as the number of pulses having the same height and width, and various input signals may be expressed not only by the number of pulses but also by the difference in pulse width or pulse height. Meanwhile, the memory cell 1111 arranged in the memory array 1100 stores a weight through a change in resistance. Therefore, as the input signal is applied to the memory cell where various levels of resistance are stored according to the weight, a current signal is output, which ultimately becomes the MAC computation result.

More specifically, when the input signals X₁, X₂, X₃,...,Xₙ are applied to memory cells C₁₁, C₂₁, C₃₁,..., Cₙ₁, each of the input signals passes through an individual memory cell and is output as an output signal X₁*C₁₁+X₂*C₂₁+X₃*C₁₃+...+Xₙ*Cₙ₁ in the form of a current through an output line L₁, and output signals are output in the same way from the remaining output lines L₂, L₃,..., Lₘ. Ultimately, analog MAC computations are performed at once as input signals input at the same time pass through the memory cells where the weights are stored, which enables fast computations with less energy consumption.

Meanwhile, the non-volatile memories that makes up the memory array may be flash memories. In particular, among the flash memories, a NOR flash memory may exhibit a fast read speed and is therefore suitable for an inference-type artificial intelligence accelerator.

This flash memory may be a multi-level cell (MLC), triple level cell (TLC), or quadruple level cell (QLC) that can store two or more bits of information, rather than a single level cell (SLC) that stores one bit of information. By storing more information in one cell, the size of the memory array may be reduced.

In the analog-digital hybrid deep neural network computation device according to an embodiment of the invention, some regions of the memory array of the analog processing unit are set as a first region, and first information including synaptic weights for analog MAC computation of a first group of layers is stored therein and at least some regions of the remaining regions excluding the first region are set as a second region, and second information for digital MAC computation of a second group of layers is stored therein.

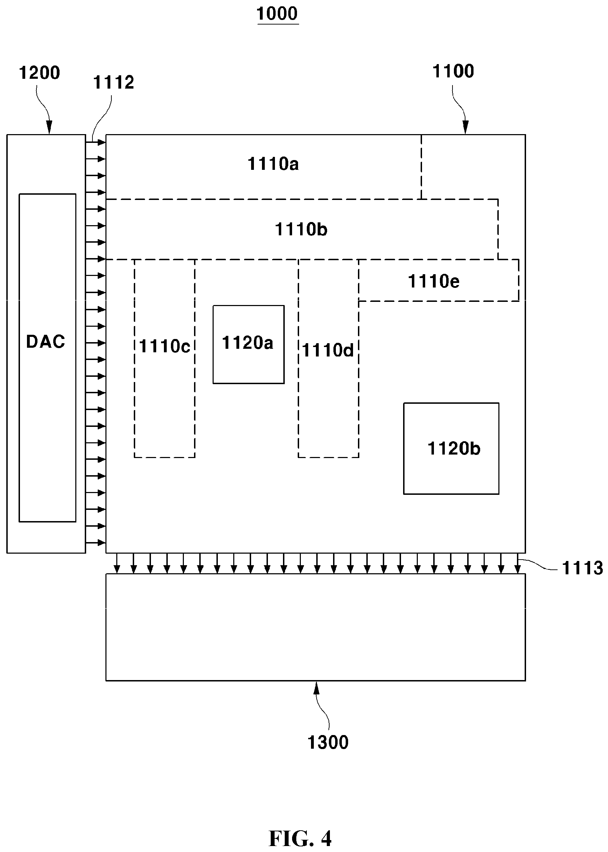

Referring to Fig. 4, analog regions 1110a, 1110b, 1110c, 1110d, and 1110e that are a part of the memory array 1100 store synaptic weight information for analog MAC computation, and an input signal is input to the analog regions, so that the analog MAC computation is performed. The weight for each layer is stored in each region. For example, in the analog region 1110a, weights corresponding to the third layer of the deep neural network algorithm may be stored, in the analog region 1110b, weights corresponding to the fifth layer may be stored, in the analog region 1110c, weights corresponding to the sixth layer may be stored, and in the analog region 1110d and the analog region 1110e, weights corresponding to the eighth layer and weights corresponding to the tenth layer may be stored, respectively.

Meanwhile, in the digital regions 1120a and 1120b, which are some regions of regions except for the analog regions 1110a, 1110b, 1110c, 1110d, and 1110e where such synaptic weight information is stored, information for digital computing may be stored. This information may include information for control operation in the control unit, synaptic weights to be used by a logic accelerator for digital computation, or software code to be used by a central processing unit. By utilizing the non-volatile memory included in the analog processing unit rather than using a separate storage device to store information for digital computing, unnecessary energy consumption can be reduced and the size of the device can be reduced. In particular, in a conventional computing device for digital computing, a DRAM and a storage device using a non-volatile memory placed inside or outside the computing device are essentially required. In the invention, a separate storage device and DRAM for digital computing are not required, and thus an area of the computing device can be reduced, thereby capable of providing the computing device at low cost and avoiding excessive energy consumption due to memory barriers.

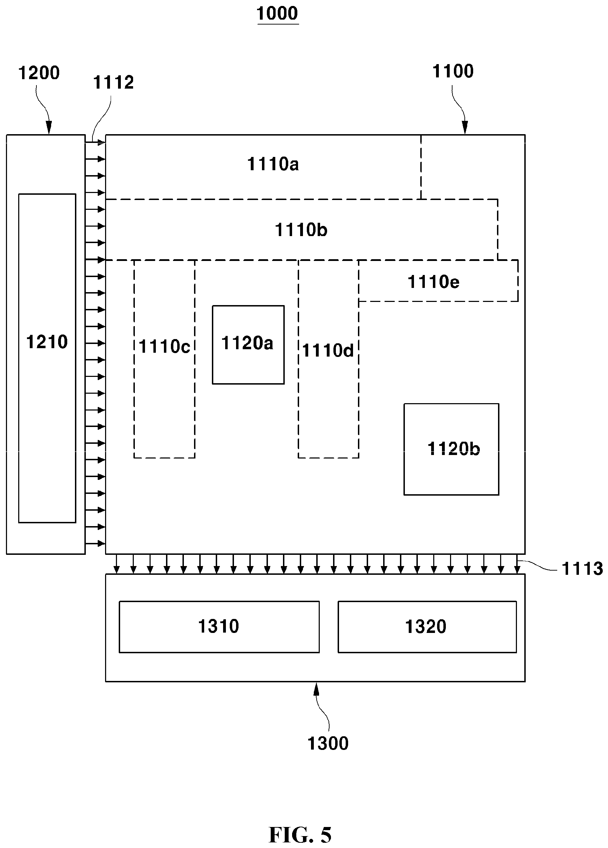

Fig. 5 illustrates the analog processing unit 1000 in a deep neural network computing device according to an embodiment of the invention. The input unit 1200 included in the analog processing unit 1000 may include a digital-to-analog converter (DAC) 1210 that converts a digital signal into an analog signal, and the output unit 1300 may include an analog-to-digital converter (ADC) 1310 that converts an analog signal into a digital signal and a sense amplifier (SA) 1320.

Since the output signal, which is the result of the analog MAC computation output from the memory array 1110, is an analog signal as a current signal, it is required to convert the analog signal into a digital signal. Therefore, the output unit 1300 requires the analog-to-digital converter 1310.

Meanwhile, information for digital MAC computation in a digital unit is also stored in the memory array of an analog unit, and in this case, a sense amplifier suitable for extracting digital information is required to extract the stored information.

Therefore, in an embodiment of the invention, the output unit 1300 connected to the memory array 1100 may include both the analog-to-digital converter 1310 for converting an analog signal into a digital signal and the sense amplifier 1320 for extracting digital information.

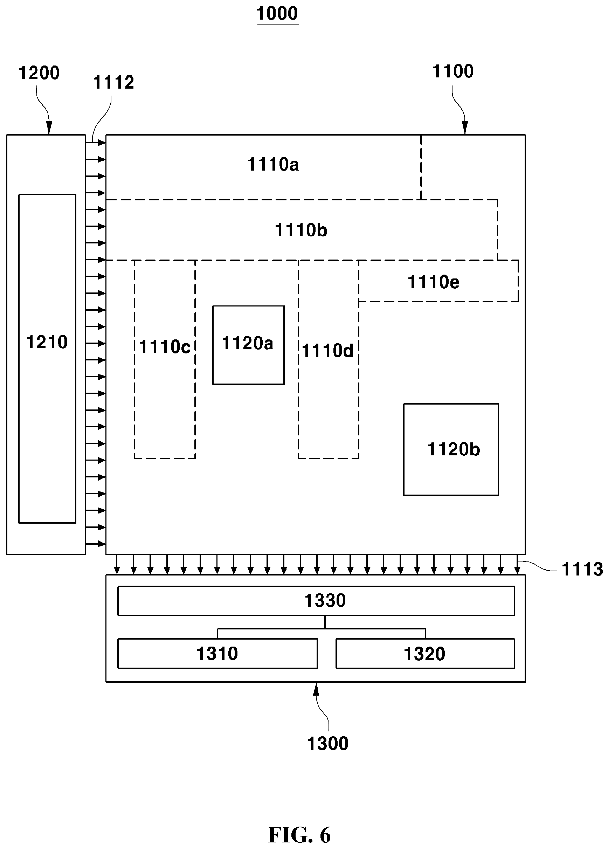

Fig. 6 illustrates that the output unit 1300 of the analog processing unit 1000 in the deep neural network computing device according to an embodiment of the invention further includes a branch circuit 1330. When an output signal is a signal output from the analog regions 1110a, 1110b, 1110c, 1110d, and 1110e, the signal is transmitted to the analog-to-digital converter 1310, and when an output signal is a signal output from digital region 1120a and 1120b, the signal is transmitted to the sense amplifier 1320. To this end, the output unit 1300 includes the branch circuit 1330, and the branch circuit 1330 may transmit the output signal to the analog-to-digital converter 1310 when a signal output from the memory array is an analog MAC computation result, and may transmit the output to the sense amplifier 1320 when an output signal is information for a digital MAC computation. In addition, for the sense amplifier operation, an appropriate input signal suitable for the sense amplifier operation may be applied from the input unit 1200, and this input signal may be applied by the digital-to-analog converter 1210.

Meanwhile, whether to transmit the output signal to the analog-to-digital converter or the sense amplifier may be determined through a row decoder and column decoder connected to the memory array, and whether it is the result of the analog MAC computation of the first group of layers or information extraction for the operation of the second group of layers may be determined through information about which region the output is from, the operation time or order, etc.

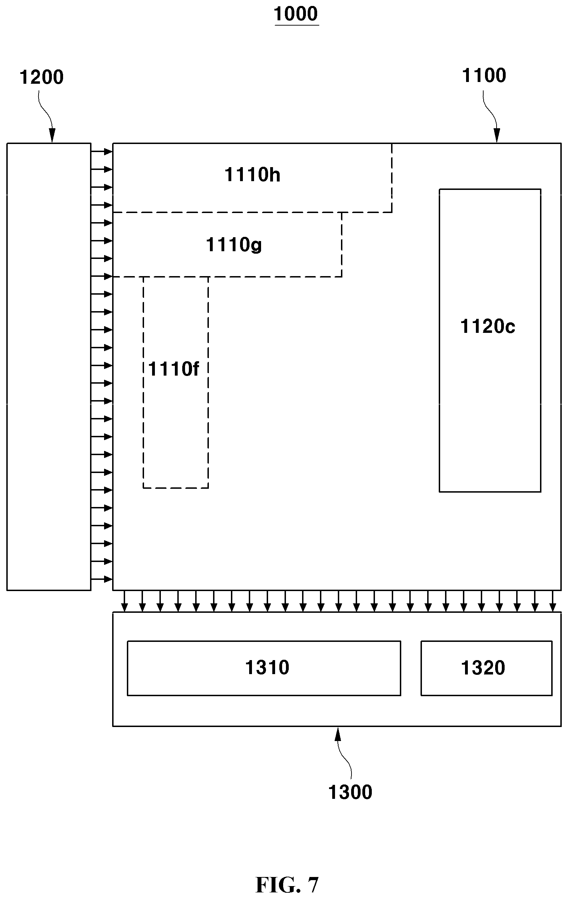

Meanwhile, Fig. 7 illustrates that output electrode lines of the analog region and the digital region are designated so as not to overlap each other in the memory array of the deep neural network computing device according to an embodiment of the invention. Through this, the analog-to-digital converter may be connected to the output electrode line connected to the analog region without a branch circuit, and the sense amplifier may be connected to the output electrode line connected to the digital region.

Meanwhile, in the DNN computing device according to an embodiment of the invention, the digital processing unit may include a controller, a logic operation device, and an SRAM, and may not include a DRAM. A typical digital DNN computing device necessarily includes a DRAM for storing information for MAC computation. Recently, there are cases where the DNN computing device sometimes uses only the SRAM without using the DRAM, but in this case, an external storage device is essentially required, and problems such as excessive manufacturing cost, size, and excessive power consumption occur. In contrast, in the invention, by storing information related to an analog processing unit, it is possible to not include a DRAM. Although the DNN computing device uses an SRAM, a smaller number of storage devices can be used compared to a conventional digital computing device.

The digital MAC computation through the digital processing unit first loads information extracted from the memory array of the analog processing unit into the SRAM, and then performs the digital MAC computation in the logic operation unit using the loaded information.

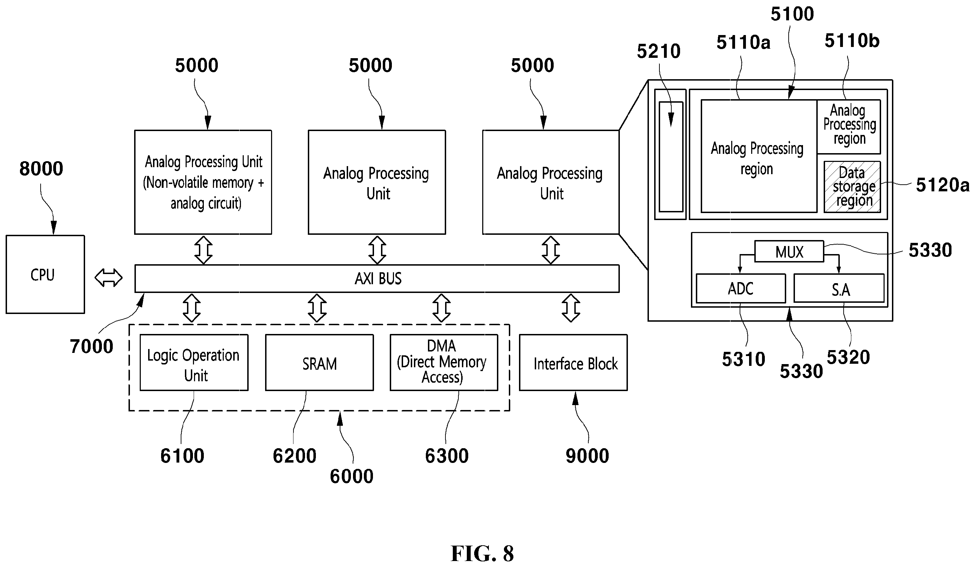

Fig. 8 illustrates a schematic diagram of a computing device according to an embodiment of the invention. The computing device includes a plurality of analog processing units 5000, a digital processing unit 6000, a control unit 8000, and an AXI BUS 7100 as a multi-channel bus connecting these units.

When digital MAC computation is required, necessary information is extracted from a digital information region 5120a of a memory array 5100. The extraction of necessary information is performed by determining whether a signal output from the memory array 5100 is a signal extracted from analog information regions 5110a and 5110b or a signal extracted from the digital information region 5120a, and when it is determined to be a signal extracted from the digital information region 5120a, a DAC 5210 is selected through a single input line operation suitable for the sense amplifier operation, and an output signal is transmitted to a sense amplifier 5320 through a multiplexer 5330, which is a branch circuit. Information extracted through the sense amplifier 5320 is stored in an SRAM 6200 and then used to perform digital MAC computation in a logic operation unit 6100. Thereafter, the result of the computation is stored in the SRAM 6200 for the next computation. This process of storing the result in the SRAM is controlled by a direct memory access (DMA) 6300.

**In** the next step, if analog MAC computation is required, the result of digital MAC computation stored in the SRAM is transmitted to the analog processing unit 5000 and applied to the memory array 5100 through the DAC 5210 included in the analog processing unit 5000 to perform the analog MAC computation and the result thereof is output through an ADC 5310. Likewise, it is determined whether the result output from the memory array 5100 is a signal extracted from the analog information regions 5110a and 5110b or a signal extracted from the digital information region 5120a, and when it is determined to be the signal extracted from the analog information regions 5110a and 5110b, the output signal is transmitted to the ADC 5310 through a multiplexer 5330, which is a branch circuit. The finally computed result is output to an external circuit through a connection block 9000.

## Claims

1. An analog-digital hybrid deep neural network computing device, which is an artificial intelligence accelerator for algorithmic computation according to a deep neural network (DNN), comprising:
a control unit (4000; 8000);
an analog processing unit (1000; 5000);
a digital processing unit (2000; 6000); and
a multi-channel bus (3000),
wherein the algorithm includes a plurality of layers for computation, an analog MAC computation in an analog computing manner is performed for a first group of layers including one or more layers among the plurality of layers in the analog processing unit, and
a digital MAC computation in a digital computing manner is performed for a second group of layers, which is the remaining layers except for the first group of layers, in the digital processing unit.

2. The analog-digital hybrid deep neural network computing device according to Claim 1,
wherein said analog processing unit (1000; 5000) includes a memory array (1100; 5100) including a plurality of non-volatile memories, an input unit (1200; 5200), and an output unit (1300; 5300),
some regions in said memory array are set as a first region, and first information including a synaptic weight for said analog MAC computation in said analog processing unit may be stored therein, and
at least some regions in the remaining regions excluding said first region are set as a second region, and second information including information for said digital MAC computation in said digital processing unit may be stored therein.

3. The analog-digital hybrid deep neural network computing device according to Claim 2,
wherein said input unit (1200; 5200) includes a digital-to-analog converter, DAC, (1210; 5210) that converts a digital signal into an analog signal, and
said output unit (1300: 5300) includes an analog-to-digital converter, ADC, (1310; 5310) and a sense amplifier, SA, (1320; 5320).

4. The analog-digital hybrid deep neural network computing device according to Claim 3,
wherein said output unit (1300; 5300) furthers include a branch circuit, and the branch circuit transmits an output signal output from said memory array to said analog-to-digital converter when said output signal is a result of said analog MAC computation and transmits the output signal to the sense amplifier when said output signal is the second information.

5. The analog-digital hybrid deep neural network computing device according to one of Claims 2 to 4,
wherein said memory array (1100; 5100) in said analog processing unit is an array of flash memories.

6. The analog-digital hybrid deep neural network computing device according to Claim 5,
wherein said flash memory is a memory capable of storing 2 or more bits of information per memory cell.

7. The analog-digital hybrid deep neural network computing device according to one of Claims 1 to 6,
wherein said digital processing unit (2000; 6000) includes a logic operation unit and an SRAM, and does not include a DRAM.

8. The analog-digital hybrid deep neural network computing device according to one of Claims 1 to 7,
wherein said first group of layers includes a fully connected layer.

9. A method for an algorithmic computation according to a deep neural network (DNN) through an analog-digital hybrid deep neural network computing device including an analog processing unit (1000; 5000) for analog computation, a digital processing unit (2000; 6000) for digital computation, a multi-channel bus (3000), and a control unit (4000; 8000),
wherein the algorithm includes a plurality of neural network layers for computation, an analog multiplication and accumulation (MAC) computation is performed in an analog computing manner for a first group of layers including one or more layers among the plurality of layers, and MAC computation is performed in a digital computing manner for a second group of layers, which is the remaining layers except the first group of layers.

10. The method according to Claim 9,
wherein said analog processing unit (1000; 5000) includes a memory array (1100; 5100) including a plurality of non-volatile memories, an input unit, and an output unit,
the method further comprises:
(a) setting some regions in said memory array as a first region and setting at least some regions in the remaining regions excluding the first region as a second region,
(b) storing first information including a synaptic weight for said analog MAC computation in the first region, and storing second information including information for said digital MAC computation in the second region,
(c) performing the analog MAC computation through the first information stored in the first region when layers for computation among said neural network layers are said first group of layers, and
(d) performing said digital MAC computation in said digital processing unit by extracting the second information from the second region when the layers for the computation among said neural network layers are said second group of layers.

11. The method according to Claim 9 or 10,
wherein said digital processing unit (2000; 6000) may include a controller, a logic operation unit, and an SRAM, and may not include a DRAM, and
said digital MAC computation include loading the extracted second information into the SRAM of said digital processing unit, and performing the digital MAC computation in said logic operation unit using the loaded second information.

12. The method according to one of Claims 9 to 11,
wherein, in said analog processing unit (1000; 5000), said input unit may include a digital-to-analog converter (DAC) that converts a digital signal into an analog signal, and said output unit may include a branch circuit, an analog-to-digital converter (ADC), and a sense amplifier (SA), and
said (c) includes
converting a digital input signal into an analog input signal through the digital-to-analog converter and inputted to the memory array;
performing the analog MAC computation by the analog input signal inputted to the memory array; and
transmitting the result of the analog MAC computation to the analog-to-digital conversion unit through the branch circuit and converting a result of the analog MAC computation into a digital output signal, and
in said (d), the extraction of the second information is accomplished by applying a signal to said second region from said digital-to-analog converter and
transmitting an output signal from said second region to the sense amplifier through the branch circuit.

13. The method according to one of Claims 9 to 12,
wherein said first group of layers includes a fully connected layer.

14. The method according to one of Claims 9 to 13,
wherein the computation of said first group of layers and the computation of said second group of layers are performed at non-overlapping times.
